# EUROPÄISCHE PATENTSCHRIFT

(11) **EP 2 144 212 B1**
(45) Veröffentlichungstag und Bekanntmachung des Hinweises auf die Patenterteilung: **19.09.2012**
(21) Anmeldenummer: 09006694.5
(22) Anmeldetag: 19.05.2009
(51) Int. Cl.: G08B 25/08, H04M 11/04, G08B 25/00

(54) **Sprachtelefon mit Überwachungsmodus**
Telephone with surveillance mode
Téléphone avec mode de surveillance

(30) Priorität: 10.07.2008 DE 102008032438
(43) Veröffentlichungstag der Anmeldung: 13.01.2010
(73) Patentinhaber: Deutsche Telekom AG, 53113 Bonn (DE)
(72) Erfinder: Hasemann, Jörg-Michael Dr., 27321 Emtinghausen (DE)

(56) Entgegenhaltungen:
- WO-A-02/061706
- WO-A-2005/106815
- DE-A1- 10 342 707
- US-A- 5 173 932
- US-A1- 2006 205 384

## Beschreibung

Die Erfindung betrifft ein Verfahren und ein System zur Überwachung einer räumlichen Umgebung.

Generell sind derartige Überwachungssysteme bekannt, bei denen ein empfindlicher Sender, im Volksmund auch Wanze genannt, in dem zu überwachenden Raum installiert wird und von dort die aufgenommenen Geräusche drahtlos an einen entsprechenden Empfänger sendet. Seitens des Empfängers werden diese Geräusche aufgezeichnet und/oder unmittelbar ausgewertet. Solche Systeme sind schwierig und meist nur mit illegalen Mitteln oder nach richterlicher Anordnung zu installieren. Auch sind Alarmanlagen bekannt, die sich gesondert in Räumen zu installierender Sensoren bedienen. Diese können mit der Polizei oder privaten Sicherheitsdienstleistern verbunden sein, die im Alarmfall reagieren.

Zudem sind beispielsweise aus dem G 91 06 916 U1 Überwachungssysteme für Räume bekannt, die sich eines an ein Telefonnetz angeschlossenen Telefons bedienen, wobei das Telefon bei auftretendem und über das Mikrofon entdecktem Geräusch eine vorgegebene Rufnummer anwählt. Solche Systeme lassen sich besonders gut als "Babyfon" einsetzen. Da sie nicht sonderlich selektiv sind, reagieren sie auf Geräusche jeglicher Art und lösen damit Fehlalarme aus.

Die WO 02/061706 A1 offenbart ein Überwachungsvorrichtung mit einer vor Ort installierten ACU. Dabei handelt es sich um eine Alarm-Control-Unit, die an einem zu überwachenden Ort angebracht ist. Diese Einheit ist dafür eingerichtet, um Signale, die durch vor Ort installierte Sensoreinheiten (Detection Devices) empfangen wurden, weiterzuverarbeiten und Informationen entsprechend den empfangenen Signalen zu einer entfernten Überwachungsstation zu übertragen.

Aufgabe der Erfindung ist es nunmehr, ein solches Verfahren und System zur Überwachung einer räumlichen Umgebung zu schaffen, das sich besonders einfach mit vorhandenen Mitteln umsetzen lässt, das selektiv und zuverlässig arbeitet und das eine komfortable Nutzung ermöglicht.

Diese Aufgaben werden durch das Verfahren mit den kennzeichnenden Merkmalen des Anspruchs 1 und das System nach Anspruch 5 das gelöst. Vorteilhafte Ausgestaltungen der Erfindung sind in den jeweiligen Unteransprüchen genannt.

Ein erster wesentlicher Grundgedanke der Erfindung liegt in der Trennung der durch das Telefongerät bewerkstelligten Geräuschaufnahme von der von einem zentral aufgestellten Server durchgeführten Auswertung und Weiterverarbeitung der generierten Signale. Diese Vorgehensweise erlaubt auf der einen Seite eine Zentralisierung der Sicherheitsdienstleistung mit herkömmlichen Geräten und dadurch die einfache Installation einer Reihe von Funktionen, die ihrerseits alle zum Erfolg der Erfindung beitragen.

Grundlegend für die Umsetzung des erfindungsgemäßen Verfahrens ist, dass das herkömmliche Telefon, in einen Überwachungsmodus geschaltet wird, der die Aufnahme akustischer Signale in der räumlichen Umgebung ermöglicht. Dabei wird die räumliche Umgebung fortwährend belauscht, also eventuell vorhandene Signale andauernd oder in zyklischer Abfolge aufgenommen. Dafür dient insbesondere das im Telefongerät vorhandene Mikrofon. Seitens des Telefongerätes werden dann die aufgenommenen Signale zu Daten verarbeitet, die über das Kommunikationsnetz an einen als Server, insbesondere als Mediaserver, ausgebildeten zentralen Computer gesendet werden. Seitens des Servers findet die automatische Analyse der Daten statt. Dabei untersucht der Server die Daten mittels einer Filterfunktion auf das Vorhandensein von Fehlgeräuschen, also Geräuschen, die üblicherweise in der überwachten Umgebung nicht vorkommen und/oder auf die besonderes Augenmerk gelenkt werden soll. Wenn ein solches Fehlgeräusch erkannt wird, generiert der Server eine Fehlermeldung, die er einem vorgegebenen Alarmempfänger übermittelt.

Die Übermittlung der Fehlermeldung an den Alarmempfänger geschieht auch über ein Kommunikationsnetz, das nicht dasselbe sein muss, wie das zwischen Endgerät und Server.

Die Endgeräte des Systems, bei denen es sich insbesondere um Mobil-, Festnetz- und/oder VoIP-basierte Telefongeräte handelt, brauchen lediglich mit dem Server des Sicherheitssystems über das Kommunikationsnetz verbunden werden. Sobald das Sicherheitssystem aktiviert ist, kann eine Detektion der Geräusche stattfinden, wobei im Fall des Vorhandeseins von Geräuschen im Einzugsbereich des Telefongeräts der Alarm abgesetzt wird.

Mit dieser Erfindung ist es möglich, kostengünstig ein zuverlässiges und komfortabel zu handhabendes Sicherheitssystem für Privat- und Geschäftskunden zu erstellen, das seitens eines Diensteanbieters, insbesondere eines Netzbetreibers, betrieben werden kann. Bei dieser Vorgehensweise können Telefongeräte der Kunden in Verbindung mit dem erfindungsgemäßen Server genutzt werden, um beispielsweise Einbruchslärm zu erkennen und einen entsprechenden Alarm abzusetzen. Die Erfindung ist problemlos mit allen gängigen Sprachkommunikationstechnologien, wie analoger Übertragung, ISDN, VoiP, IMS, Mobilnetz und Festnetz, umzusetzen.

Da die Kosten für die Sprachtelekommunikation in den letzten Jahren dramatisch gefallen sind, ist die Realisierung der Erfindung problemlos möglich. Insbesondere etablieren sich bei Festnetzverbindungen "Flatrate"-Angebote, die unabhängig vom Kommunikationsaufkommen einen festen Betrag pro Monat und die Anschlussgebühren kosten. Gleiches gilt für die Datenübertragung von Telefongesprächen mittels Internet "Voice over IP" (VoIP).In einer nicht beanspruchten Variante könnte das Verfahren so ausgestaltet werden, dass die Netzverbindung zwischen Telefongerät und Server erst aufgebaut wird, sobald das Telefongerät etwas "Verdächtiges" bemerkt. Dazu könnte beispielsweise im Telefongerät, wobei mit "Endgerät" auch ein unmittelbar damit zusammenhängendes Gerät gemeint ist, eine Triggerschwelle eingestellt werden, deren Über- oder Unterschreitung zum Leitungsaufbau führt.

Erfindungsgemäß, insbesondere bei vorhandener Flatrate, besteht die Verbindung permanent.

Die erfindungsgemäße Verfahrensweise ist insbesondere im Falle von VoIP attraktiv, da es aufgrund der Tatsache, dass VoIP praktisch keinen Datenverkehr bei Stille verursacht, Ressourcen geschont werden. Zudem lässt sich die Option als VolP - Service besonders einfach in kurzer Zeit für eine große Anzahl von Endgeräten realisieren.

Ein weiterer Gesichtspunkt ist, dass es technisch ausgereifte Module zur automatischen Spracherkennung und insbesondere zur Erkennung des Vorhandenseins von Sprache ("Voice Activity Detection") gibt, die akustische Signale zuverlässig untersuchen können. Zu diesen Signalen gehört auch der von Einbrechern verursachte Lärm, wobei die mit dem Lärm verbundenen akustischen Signale von den Endgeräten aufgenommen werden können. Insbesondere erlebte die Technologie der Mikrofone in Endgeräten einen erheblichen Fortschritt, so dass diese Geräte als zuverlässige Sensoren eingesetzt werden können.

In einer besonders vorteilhaften Ausführungsform ist das Telefongerät mit einer Funktion ausgestattet, die es ermöglicht, ein Abbrechen der Verbindung zum Server des Sicherheitssystems zu erkennen, wobei eine unterbrochene Verbindung automatisch wieder hergestellt wird. Um die Abhörsicherheit zu erhöhen, kann seitens des Telefongeräts, also in dem Telefongerät selber oder in den mit dem Telefongerät unmittelbar verbundenen Geräten, beispielsweise der Basisstation, eine Funktion realisiert sein, mit der die aufgenommen Umgebungsgeräusche verschlüsselt, also insbesondere verändert oder ersetzt, werden. Seitens des Server müssen dann entsprechende Mechanismen zur Dekodierung vorgesehen werden. Das Telefongerät kann auch mit einer Vorrichtung ausgestattet sein, die deren Erkennung zwecks Überprüfung bei Aufbau der Verbindung ermöglicht.

Auch der Server kann mit Mitteln ausgestattet sein, die ein Abbrechen der Verbindung zum Endgerät erkennen und automatisch versuchen, diese wieder herzustellen, wobei auf Seiten des Telefonggeräts eine zumindest für den Server erreichbare Funktion zur Rufannahme implementiert ist.

Seitens des Servers ist es vorteilhaft, bezüglich der Spracherkennung nachfolgende Funktionalitäten vorzusehen: So ist es verhältnismäßig einfach, Triggerschwellen in Form von Schwellwerten, beispielsweise für die Lautstärke und/oder den Frequenzbereich und/oder die Wiederholungsrate, festzulegen, bei dessen Überschreitung der Alarm abgesetzt, also die Fehlermeldung generiert und übermittelt wird. Der Server kann auch so eingerichtet werden, dass er nur innerhalb eines oder mehrerer Zeiträume den Alarm absetzen kann.

Für die Filterfunktion können eine Reihe mehr oder weniger komplexer Funktionen eingesetzt werden. Besonders vorteilhaft ist es jedoch, sich eines Moduls zur Sprach Aktivitäts Messung ("Voice Activity Detection") zu bedienen, welches das Vorhandensein von Sprache und Geräuschen erkennen kann. Solche Funktionen sind an sich bekannt und weisen mittlerweile eine hohe Entwicklungsstufe auf. Insbesondere ist die "Voice Activity Detection" sprachunabhängig.

Bezüglich der zu generierenden und zu versendenden Fehlermeldung ist es möglich, dass der Bestimmungsort und damit der Alarmempfänger festgelegt wird. Dazu kann beispielsweise eine Rufnummer vorgegeben werden. Der Server kann die Fehlermeldung vorteilhafterweise zusammen mit den Adressdaten der vom Telefongerät überwachten Umgebung über das Kommunikationsnetz an eine solche vorgegebene Netzkennung senden, wobei diese Netzkennung einem Sicherheitsdienst oder dem Inhaber des Telefonanschlusses zugeordnet sein kann. Die Fehlermeldung selber kann unter anderem per Textnachricht ("SMS"), per E-Mail, und als Sprachnachricht versendet werden, wobei es im Rahmen der Nachricht möglich ist, Zusatzinformation, beispielsweise betreffend die Dringlichkeit der Nachricht zu übermitteln. Die Versendung der Fehlermeldung kann vermittels eines anderen Kommunikationsnetzes erfolgen als dem zwischen Endgerät und Server. Alle diese Funktionen können vollständig automatisiert ablaufen, nachdem der Server ein Fehlgeräusch identifiziert hat.

In einer besonders vorteilhaften Ausführungsform der Erfindung wird die räumliche Umgebung nicht nur mit einem, sondern mit mehreren Telefongeräten "belauscht". Dann kann als Kriterium für die Generierung einer Fehlermeldung die Gleichzeitigkeit oder eine bestimmte Abfolge von aufgenommenen Geräuschen herhalten.

Das System kann auch um häusliche Sicherheitskomponenten mit akustischer Alarmauslösung erweitert werden. So können die Signale akustischer Feuermelder, Glasbruchmelder, Wassermelder oder Ähnlichem selektiv registriert werden, indem die Filterfunktion auf diese Signale "geeicht" wird. Ein von diesen Geräten ausgelöster akustischer Alarm würde dann von dem oder den Telefongeräten empfangen und an den Server des Sicherheitssystems weitergeleitet, wo die Weiterverarbeitung stattfindet.

In einer weiteren Ausführungsform ist es möglich, die registrierten Geräusche zum Zwecke der Dokumentation im Alarmfall mitzuschneiden. Solcherart mitgeschnittene akustische Information kann im Alarmfall als Datei mit an den Alarmempfänger übergeben oder bei einem systemgenerierten Sprachanruf übertragen werden.

Zudem kann es vorteilhaft sein, wenn die Parametrisierung, die Konfiguration oder einfach das Scharfschalten des Systems von Außen ermöglicht wird. Dazu kann dem Nutzer ein Zugang zum System über das Internet oder über ein WAP Protokoll bereit gestellt werden. Um eine Systemsicherheit zu gewährleisten, ist es vorteilhaft, wenn ausschließlich konfigurierte und erkannte Endgeräte eine Verbindung zum Server aufbauen können. Die Erkennung der Endgeräte kann auf Basis von vom Endgerät bereitgestellter eindeutiger Informationen erfolgen oder aber netzseitig per CLIP ("calling line identification") oder per DSL-Line-Erkennung erfolgen.

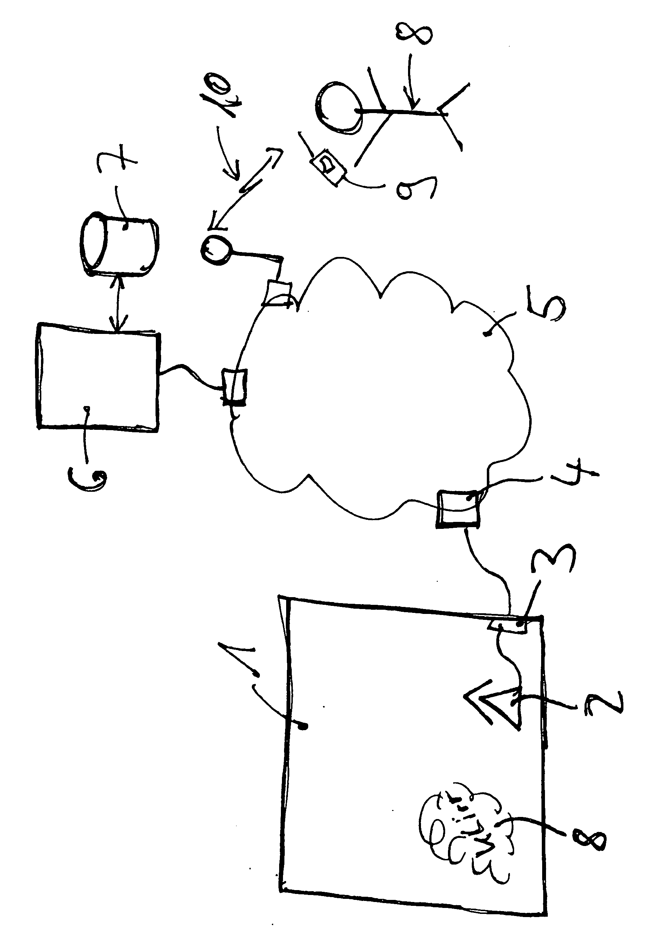

Nachfolgend wird die Erfindung anhand der Figur näher erklärt:

Die Figur zeigt ein System zur Durchführung des Verfahrens. In einem Raum 1 ist ein Telefon 2 als Telefongerät aufgestellt, das über eine Leitung via eines Basisgerätes 3 und einer Anschlussstelle 4 permanent mit dem Telefonnetz 5 und mit einem zentral zugänglicher Server 6 verbundenen ist der Zugang zu einer Datenbank 7 hat. Das Telefon 2 hat einen Überwachungsmodus, in dem es fortwährend akustische Signale aufnimmt, die im Raum 1 auftreten. In diesem Fall ist durch das Einschlagen einer Scheibe ein klirrendes Geräusch 8 entstanden.

Auf dieses Geräusch 8 reagiert das Mikrofon des Telefons und sendet dem Geräusch entsprechende Daten über das Telefonnetz an den Server 6. Auf dem Server ist eine Filterfunktion zur Filterung der Daten realisiert, die erkennt, dass es sich bei dem Klirren 8 um ein Fehlgeräusch und nicht um ein "normales" Geräusch, beispielsweise ein Knacken des Parketts handelt. Die Filterfunktion generiert eine Fehlermeldung und versendet diese auch über das Telefonnetz 5 an den Eigentümer 8, dem der Raum 1 zugeordnet ist. Dieser hat das System so eingerichtet, dass er die Fehlermeldung auf seinem Mobiltelefon 9 vermittels des Mobilfunknetzes 10 als SMS empfängt.

## Patentansprüche

1. Verfahren zur Überwachung einer räumlichen Umgebung, insbesondere eines geschlossenen Raumes (1), wobei sich in dem Raum ein Telefongerät (2) befindet, das vermittels eines Kommunikationsnetzes (5) eine Kommunikation mit anderen an das Kommunikationsnetz angeschlossenen Endgeräten ermöglicht,
wobei das Telefongerät (2) in einen Überwachungsmodus geschaltet wird, der die Aufnahme akustischer Signale aus der räumlichen Umgebung (1) ermöglicht, wobei die räumliche Umgebung fortwährend belauscht wird,
wobei in dem Überwachungsmodus das Telefongerät permanent mit einem zentralen Computer (6) verbunden ist und Daten, die aufgenommenen Signalen entsprechen, seitens des Telefongeräts (2) über das Kommunikationsnetz (5) an den zentralen Computer (6) gesendet werden, der die Daten automatisch auf das Vorhandensein von Fehlgeräuschen analysiert, und
wobei der zentrale Computer (6) bei Erkennung eines Fehlgeräusches eine Fehlermeldung generiert, die er einem vorgegebenen Alarmempfänger (8) übermittelt.

2. Verfahren nach Anspruch 1,
**dadurch gekennzeichnet,**
**dass** der Computer (6) die Fehlermeldung insbesondere zusammen mit den Adressdaten der vom Telefongerät (2) überwachten Umgebung (1) über das Kommunikationsnetz (5) an eine vorgegebene Netzkennung sendet, wobei die Netzkennung insbesondere einem Sicherheitsdienst oder dem Inhaber des Telefon-Anschlusses zugeordnet ist.

3. Verfahren nach einem der vorherigen Ansprüche,
**dadurch gekennzeichnet,**
**dass** die aus den Signalen gewonnenen Daten im Telefongerät (2) oder eine damit unmittelbar verbundenen Einrichtung vor der Übertragung verschlüsselt werden.

4. Verfahren nach einem der vorherigen Ansprüche,
**dadurch gekennzeichnet,**
**dass** die Analyse der Daten mittels eines Moduls zur Sprach Aktivitäts-Messung ("Voice Activity Detection") durchgeführt wird.

5. System, welches das Verfahrens nach einem der vorherigen Ansprüche durchführt, aufweisend ein Telefongerät (2), und einen zentral zugänglichen Computer (6),
**dadurch gekennzeichnet,**
**dass** das Telefongerät (2) einen Überwachungsmodus hat, in dem es fortwährend akustische Signale aus der räumlichen Umgebung (1) aufnimmt, und den Signalen entsprechende Daten über das Kommunikationsnetz (5) an den Computer (6) sendet,
**dass** der Computer (6) eine Filterfunktion zur Filterung der Daten zum Zwecke der Erkennung von Fehlgeräuschen aufweist, wobei die Filterfunktion bei erkanntem Fehlgeräusch eine zu versendende Fehlermeldung generiert.

6. System nach Anspruch 5,
**dadurch gekennzeichnet,**
**dass** das Kommunikationsnetz (5) ein mobiles Telefonnetz und/oder ein Telefonfestnetz und/oder das Internet umfasst.

7. System nach einem der Ansprüche 5 bis, 6,
**dadurch gekennzeichnet,**
**dass** das System auf die Signale akustischer Gefahrenmelder, insbesondere Feuermelder, Glasbruchmelder, Wassermelder oder Ähnlichem, selektiv eingestellt ist.

## Claims

1. A method for monitoring a spatial environment, in particular an enclosed room (1), wherein a telephone device (2) is present in the room which enables communication via a communications network (5) with other terminals connected to the communications network,
wherein the telephone device (2) is switched into a monitoring mode which enables the recording of acoustic signals from the spatial environment (1), wherein the spatial environment is continuously overheard,
wherein, in the monitoring mode, the telephone is permanently connected to a central computer (6) and data corresponding to the recorded signals are sent from the telephone device (2) to the central computer (6) via the communications network (5), the computer automatically analysing the data for the presence of erroneous noise, and
wherein, in case an erroneous noise is detected, the central computer (6) generates an error message and transmits it to a predetermined alarm receiver (8).

2. The method according to claim 1,
**characterised in that** the computer (6) sends the error message, in particular together with the address data of the spatial environment (1) monitored by the telephone device (2) to a predetermined network identifier via the communications network (5), wherein the network identifier is particularly assigned to a security agency or the owner of the telephone connection.

3. The method according to any one of the preceding claims,
**characterised in that**, before transmission, the data obtained from the signals are encrypted in the telephone device (2) or in a device immediately connected thereto.

4. The method according to any one of the preceding claims,
**characterised in that** the analysis of the data is performed by means of a module for voice activity detection.

5. A system carrying out the method according to any one of the preceding claims, comprising a telephone device (2) and a centrally accessible computer (6),
**characterised in that** the telephone device (2) has a monitoring mode in which it continuously records acoustic signals from the spatial environment (1) and sends data corresponding to the signals to the computer (6) via the communications network (5),
that the computer (6) has a filtering function for filtering the data for the purpose of detecting erroneous noise, wherein the filtering function generates, in case an erroneous noise is detected, an error message to be transmitted.

6. The system according to claim 5,
**characterised in that** the communications network (5) comprises a mobile telephone network and/or a fixed line telephone network and/or the internet.

7. The system according to any one of claims 5 to 6,
**characterised in that** the system is selectively adjusted for the signals of acoustic alarm devices, in particular fire detectors, glass break detectors, water detectors or the like.

## Revendications

1. Procédé de surveillance d'un environnement spatial, notamment d'un espace fermé (1), un terminal téléphonique (2) situé dans l'espace et permettant, par l'intermédiaire d'un réseau de communication (5), de communiquer avec d'autres terminaux raccordés au réseau de communication, dans lequel
le terminal téléphonique (2) passe dans un mode de surveillance permettant l'enregistrement de signaux acoustiques provenant de l'environnement spatial (1), l'environnement spatial étant en permanence espionné,
le terminal téléphonique est en permanence relié à un ordinateur central (6) lorsqu'il est dans le mode de surveillance, et le terminal téléphonique (2) envoie, par l'intermédiaire du réseau de communication (5), des données correspondant à des signaux enregistrés, à l'ordinateur central (6) qui analyse les données automatiquement pour vérifier la présence de bruits anormaux, et
l'ordinateur central (6) génère un message d'erreur lorsqu'il détecte un bruit anormal et le transmet à un récepteur d'alarme (8) prédéterminé.

2. Procédé selon la revendication 1,
**caractérisé en ce que** l'ordinateur (6) envoie le message à un identifiant réseau prédéterminé par l'intermédiaire du réseau de communication (5), notamment accompagné des données d'adresse de l'environnement surveillé (1) par le terminal téléphonique (2), l'identifiant réseau étant associé notamment à un service de sécurité ou au détenteur de la ligne téléphonique.

3. Procédé selon l'une des revendications précédentes,
**caractérisé en ce que**, avant d'être transmises, les données obtenues à partir des signaux sont codées dans le terminal téléphonique (2) ou dans un équipement directement relié à celui-ci.

4. Procédé selon l'une des revendications précédentes,
**caractérisé en ce que** l'analyse des données est réalisée au moyen d'un module de détection de l'activité vocale ("Voice Activity Detection").

5. Système mettant en oeuvre le procédé selon l'une des revendications précédentes, comprenant un terminal téléphonique (2) et un ordinateur central (6),
**caractérisé en ce que** le terminal téléphonique (2) dispose d'un mode de surveillance dans lequel il enregistre en permanence des signaux acoustiques provenant de l'environnement spatial (1) et envoie des données correspondant aux signaux à l'ordinateur (6) par l'intermédiaire du réseau de communication (5),
l'ordinateur (6) comporte une fonction de filtrage des données pour détecter des bruits anormaux, la fonction de filtrage générant, après détection d'un bruit anormal, un message d'erreur destiné à être envoyé.

6. Système selon la revendication 5,
**caractérisé en ce que** le réseau de communication (5) comprend un réseau de téléphonie mobile et/ou un réseau de téléphonie fixe et/ou l'internet.

7. Système selon l'une des revendications 5 à 6,
**caractérisé en ce que** le système est réglé pour enregistrer de manière sélective les signaux de détecteurs acoustiques de danger, notamment des détecteurs d'incendie, de bris de verre, d'eau ou similaire.
